# EUROPÄISCHE PATENTSCHRIFT

(11) **EP 1 792 458 B1**
(45) Veröffentlichungstag und Bekanntmachung des Hinweises auf die Patenterteilung: **14.05.2008**
(21) Anmeldenummer: 05797076.6
(22) Anmeldetag: 23.09.2005
(51) Int. Cl.: H04L 27/20, G06K 19/06, H03B 11/04

(54) **SCHWINGKREISANORDNUNG, VERFAHREN ZUM BETRIEB EINER SOLCHEN UND DEREN VERWENDUNG**
RESONANT CIRCUIT ARRANGEMENT, METHOD FOR OPERATING SAID RESONANT CIRCUIT ARRANGEMENT AND METHOD FOR THE OPERATION AND USE THEREOF
CIRCUIT RESONANT, PROCEDE POUR FAIRE FONCTIONNER CE CIRCUIT RESONANT, ET UTILISATION DUDIT CIRCUIT RESONANT

(30) Priorität: 23.09.2004 DE 102004046255
(43) Veröffentlichungstag der Anmeldung: 06.06.2007
(73) Patentinhaber: Austriamicrosystems AG, A-8141 Unterpremstätten (AT)
(72) Erfinder: FORSYTH, Richard, A-8010 Graz (AT); FITZI, Andreas, CH-8712 Stäfa (CH)
(74) Vertreter: Epping - Hermann - Fischer
(86) Internationale Anmeldenummer: PCT/EP2005/010338
(87) Internationale Veröffentlichungsnummer: WO 2006/032527

(56) Entgegenhaltungen:
- US-A1- 2001 055 005
- US-A1- 2003 206 069

## Beschreibung

Schwingkreisanordnungen werden als Signalgeneratoren oder Sender im niederfrequenten Bereich für amplituden- oder phasenumgetastete Signale eingesetzt. Sie können auch in kombinierten Sende- und Empfangseinrichtungen, so genannten Transpondern, eingesetzt werden.

Eine Schwingkreisanordnung umfasst im Wesentlichen ein kapazitives Speicherelement mit einem parallel geschalteten induktiven Speicherelement. Nach dem Aufladen eines, meist des kapazitiven, Speicherelements oszilliert die Energie zwischen kapazitivem und induktivem Speicherelement, sodass eine sinusförmige Spannung über dem kapazitiven und dem induktiven Speicherelement anliegt. Der Strom, der durch das induktive Speicherelement fließt, ist ebenfalls sinusförmig und zur Spannung um den Wert Π/2 phasenverschoben. Das induktive Speicherelement ist häufig als Antenne ausgestaltet, sodass das generierte Signal abgestrahlt wird und die Anordnung als Sender dient.

In bisherigen Ausgestaltungen einer Schwingkreisanordnung werden das induktive und das kapazitive Speicherelement durch einen parallel geschalteten Schalter kurzgeschlossen, wenn die Oszillation unterbrochen werden soll. Nach erneutem Wiederaufladen des kapazitiven Speicherelements kann die Schwingkreisanordnung wieder anschwingen.

Für ein Anschwingen der Schwingkreisanordnung sowie zum Ausgleich der in realen Schwingkreisanordnungen anfallenden Dämpfungsverluste und der abgestrahlten Energie ist ein Nachladen der Schwingkreisanordnung erforderlich. Das Nachladen der schwingenden Schwingkreisanordnung zum Ausgleich der Verluste geschieht, indem mit dem kapazitiven Speicherelement eine Gleichspannungsquelle, häufig in Ausgestaltung einer Batterie, über einen Schalter verbunden wird. Um den Energieverbrauch beim Nachladevorgang zu minimieren und den Schwingvorgang nicht zu beeinflussen, wird das kapazitive Speicherelement nur kurzzeitig mit der Gleichspannungsquelle verbunden, wenn die im Schwingkreis oszillierende Energie im kapazitiven Speicherelement ist. Beim Nachladen ist darauf zu achten, dass die zu diesem Zeitpunkt über dem kapazitiven Speicherelement anliegende Spannung die gleiche Polarität hat wie die der Gleichstromquelle. Ansonsten hätte das Verbinden des kapazitiven Speicherelements mit der Gleichstromquelle ein energieaufwändiges Ent- und Wiederaufladen des kapazitiven Speicherelements zur Folge.

Durch gezieltes Unterdrücken der Schwingung und Anschwingen wird die Schwingkreisanordnung verwendet, um ein amplitudenumgetastetes Signal zu generieren. Dabei ist jedes Unterdrücken der Schwingung mit der Entladung der Speicherelemente verbunden. Beim gewünschten Wiederanschwingen der Schwingkreisanordnung ist ein energieaufwändiges erneutes Aufladen des kapazitiven Speicherelements erforderlich..

Ein phasenumgetastetes Signal kann durch ein gezieltes, schnelles Ent- und Wiederaufladen der Speicherelemente generiert werden. Zu diesem Zweck wird das kapazitive Speicherelement entladen, wenn die im Schwingkreis oszillierende Energie im kapazitiven Speicherelement ist und die über dem kapazitiven Speicherelement anliegende Spannung entgegengesetzte Polarität zur anzulegenden Gleichspannung hat. Unmittelbar im Anschluss wird das kapazitive Speicherelement wieder aufgeladen. Das so generierte Signal weist nach dem Wiederanschwingen einen Phasenversatz von n auf. Bei diesem Verfahren ist der Energieverbrauch durch das häufige Ent- und Wiederaufladen des kapazitiven. Speicherelements sehr groß.

Abhängig von den zu übertragenden Daten, bei der jedes Bit einen ersten oder eine zweiten Zustand aufweisen kann, tritt bei der Amplitudenumtastung das energieaufwändige Wiederaufladen bei jedem Wechsel innerhalb des zu übertragen Datenstromes vom ersten in den zweiten Zustand auf. Beim Wechsel vom zweiten in den ersten Zustand wird das kapazitive Speicherelement entladen. Bei der Phasenumtastung tritt das Wiederaufladen bei jedem Zustandswechsel auf.

Aus der US 2001/0055005 A1 ist eine Schwingkreisanordnung bekannt, bei der das induktive Speicherelement durch einen Schalter kurzschließbar ist. Dieses Kurzschließen geht mit einer Entladung des kapazitiven Speicherelements einher.

In der D2 US 2003/0206069 A1 wird ebenfalls eine Schwingkreisanordnung beschrieben. In dieser ist ein Schalter vorgesehen, der das induktive Speicherelement vom kapazitiven Speicherelement trennt. Dieses erfolgt jedoch nicht in Abhängigkeit zu übertragender Daten.

Der hohe Energieverbrauch wirkt sich insbesondere bei Verwendung einer Batterie als Konstantspannungsquelle wegen deren begrenzter Lebensdauer nachteilig aus. Bei kontaktlosen Datenträgern, die die benötigte Energie aus dem Feld eines Schreib-/Lesegerätes.beziehen, wirkt sich ein hoher Energieverbrauch nachteilig auf die Reichweite aus.

Es stellt sich daher die Aufgabe, eine Schwingkreisanordnung derart auszugestalten, dass sie einen geringeren Energieverbrauch aufweist. Zudem soll die Verwendung einer solchen Schwingkreisanordnung sowie ein entsprechendes Verfahren zum Betrieb einer Schwingkreisanordnung angegeben werden.

Die Aufgabe wird durch die in den nebengeordneten Patentansprüchen angegebenen Maßnahmen gelöst. Demnach ist eine Schwingkreisanordnung vorgesehen mit
- einem kapazitiven Speicherelement, das einen ersten Anschluss und einen zweiten Anschluss aufweist, von denen der erste Anschluss mit einem Anschluss zur Bereitstellung einer Steuerspannung verbunden ist und von denen der zweite Anschluss mit einem Anschluss für ein Bezugspotenzial verbunden ist, und
- einem induktiven Speicherelement, das einen ersten Anschluss und einen zweiten Anschluss aufweist, von denen der erste Anschluss mit einem Anschluss für das Bezugspotenzial verbunden oder verbindbar ist, wobei
- ein erster Schalter vorgesehen ist, über den der zweite Anschluss des induktiven Speicherelements mit einem Anschluss für ein Bezugspotenzial verbindbar ist,
dadurch gekennzeichnet, dass
- ein zweiter Schalter vorgesehen ist, über den der zweite Anschluss des induktiven Speicherelements mit dem ersten Anschluss des kapazitiven Speicherelements verbindbar ist und
- eine Steuereinheit zur Ansteuerung des ersten und des zweiten Schalters in Abhängigkeit der zu übertragenden Daten vorgesehen ist.

Durch geeignete Wahl der Schaltzustände des ersten und des zweiten Schalters ist es möglich, die Schwingung durch schnelles Entladen lediglich des induktiven Speicherelements zu beenden, ohne die gespeicherte Ladung im kapazitiven Speicherelement zu beeinflussen, sodass die über dem kapazitiven Speicherelement anliegende Spannung zum Anstoßen der Schwingung dient, wenn das induktive und das kapazitive Speicherelement wieder zum Schwingkreis verbunden sind. Alternativ kann das kapazitive Speicherelement auch mit der Gleichspannungsquelle verbunden werden, wenn das induktive Speicherelement kurzgeschlossen ist.

In einer vorteilhaften Weiterentwicklung des erfindungsgemäßen Gegenstandes ist der erste Anschluss des induktiven Speicherelements sowohl über einen dritten Schalter mit einem Anschluss für das Bezugspotenzial verbindbar als auch über einen vierten Schalter mit dem ersten Anschluss des kapazitiven Speicherelements verbindbar. Auf diese Weise ist durch geeignete Ansteuerung des ersten bis vierten Schalters auch möglich eine Phasenumtastung zu generieren ohne das kapazitive Speicherelement wieder aufladen zu müssen.

Der erste Anschluss des kapazitiven Speicherelements ist über einen fünften Schalter am Anschluss für die Steuerspannung mit einer Gleichspannungsquelle verbindbar, die beispielsweise als Batterie ausgestaltet ist. Durch ein geeignetes fünftes Schaltsignal ist es möglich, das Nachladen und Aufladen des kapazitiven Speicherelements zu steuern.

Durch die Wahl der Schaltzustände des ersten bis vierten Schalters wird die Oszillation ermöglicht oder unterdrückt. Sind der dritte und vierte Schalter vorgesehen, vergibt sich durch taktweises Schalten dieser vier Schalter über dem induktiven Speicherelement ein sinusförmiges Signal.

In einer vorteilhaften Weiterentwicklung der Schwingkreisanordnung ist das induktive Speicherelement als Antenne ausgestaltet, sodass die Schwingkreisanordnung als Sender ausbildet ist.

Die Aufgabe wird auch durch ein Verfahren zum Betrieb einer Schwingkreisanordnung gelöst, bei dem in einem ersten Betriebsmodus ein induktives Speicherelement parallel zu einem kapazitiven Speicherelement geschaltet wird. In einem zweiten Betriebsmodus wird der Schwingkreis aufgetrennt und das induktive Speicherelement kurzgeschlossen. Ein Umschalten zwischen dem ersten und dem zweiten Betriebsmodus erfolgt in Abhängigkeit zu übertragender Daten.

Vorteilhafterweise ist das induktive oder insbesondere das kapazitive Speicherelement beim Schalten in den ersten Betriebsmodus.aufgeladen, sodass der Schwingkreis anschwingt.

Dies ist auch der Fall, wenn beim Schalten vom ersten in den zweiten Betriebsmodus die im kapazitiven Speicherelement gespeicherte Energie maximal ist, sodass bei Rückkehr in den ersten Betriebsmodus der Schwingkreis wieder anschwingt.

Vorteilhafterweise ist ein dritter Betriebsmodus vorgesehen, in dem das induktive Speicherelement parallel zum kapazitiven Speicherelement geschaltet wird, wobei das induktive Speicherelement gegenüber dem ersten Betriebsmodus umgepolt ist.

Es wird zwischen dem ersten und dritten Betriebsmodus oder zwischen dem zweiten und dritten Betriebsmodus umgeschaltet, wenn die Energie im kapazitiven Speicherelement maximal ist. Auf diese Weise schwingt der Schwingkreis bei einer Phasenumtastung weiter beziehungsweise er schwingt bei der Rückkehr aus dem zweiten Betriebsmodus wieder an.

Ebenso kann zwischen dem ersten und dem dritten Betriebsmodus umgeschaltet werden, was gleichbedeutend mit dem Verpolen der Anschlüsse des induktiven Speicherelements ist, wenn das kapazitive Speicherelement entladen ist. Beim Zurückschwingen der Energie in das kapazitive Speicherelement wechselt die über dem kapazitiven Speicherelement anliegende Spannung nicht ihr Vorzeichen. Dies hat einerseits den Vorteil, dass die Verluste in kürzeren Intervallen ausgleichbar sind, und dass andererseits die Phasenumtastung einfacher zu generieren ist.

Weitere vorteilhafte Ausgestaltungen der erfindungsgemäßen Schwingkreisanordnung und des erfindungsgemäßen Verfahrens sind in den Unteransprüchen angegeben.

Nachfolgend wird die Erfindung unter Bezugnahme auf die Zeichnung anhand von Ausführungsbeispielen erklärt.

Es zeigen:
Figur 1 eine erste, einfache Ausgestaltung der Schwingkreisanordnung,
Figur 2 eine zweite, weitergebildete Ausgestaltung der Schwingkreisanordnung,
Figur 3 ein Zeitdiagramm ausgewählter Signale der Schwingkreisanordnung von Figur 1 und
Figur 4 ein weiteres Zeitdiagramm ausgewählter Signale der Schwingkreisanordnung von Figur 2.

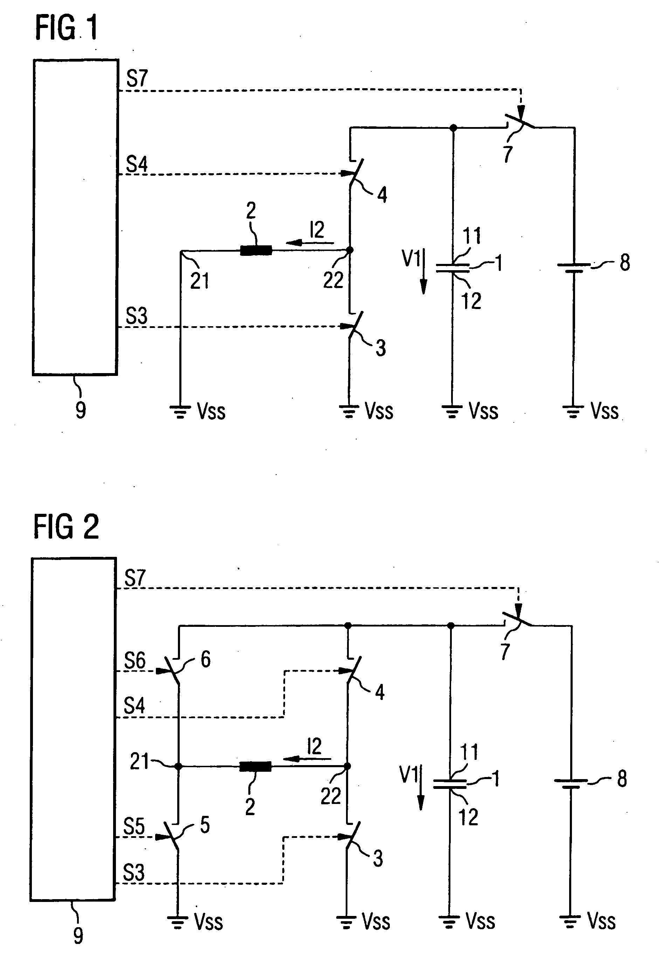

Die in Figur 1 dargestellte beispielhafte Schwingkreisanordnung umfasst ein kapazitives Speicherelement 1 mit einem ersten Anschluss 11 und einem zweiten Anschluss 12 und ein induktives Speicherelement 2 mit einem ersten Anschluss 21 und einem zweiten Anschluss 22. Der zweite Anschluss 22 des induktiven Speicherelements 2 ist über einen ersten Schalter 3 mit einem Bezugspotenzial Vss und über einen zweiten Schalter 4 mit dem ersten Anschluss 11 des kapazitiven Speicherelements 1 verbindbar. Der erste Anschluss 21 des induktiven Speicherelements 2 ist mit dem Bezugspotenzial verbunden. Der erste Anschluss 11 des kapazitiven Speicherelements 1 ist über einen fünften Schalter 7 mit einer Gleichspannungsquelle 8 verbindbar. Der zweite Anschluss 12 des kapazitiven Speicherelements ist mit dem Bezugspotenzial Vss verbunden.

Des Weiteren ist eine Steuereinheit 9 vorgesehen, die ein erstes, zweites und fünftes Schaltsignal S3, S4 und S7 zur Ansteuerung des ersten, zweiten und fünften Schalters 3, 4 und 7 bereitstellt.

In der Figur 2 ist die erste Ausgestaltung gemäß Figur 1 dahingehend weitergebildet, dass der erste Anschluss 21 des induktiven Speicherelements 2 über einen dritten Schalter 5 mit dem Bezugspotenzial Vss und über einen vierten Schalter 6 mit dem ersten Anschluss 11 des kapazitiven Speicherelements 1 verbindbar ist.

Die Steuereinheit 9 stellt zu Ansteuerung des dritten und vierten Schalters 5 und 6 weitere Schaltsignale S5 und S6 bereit.

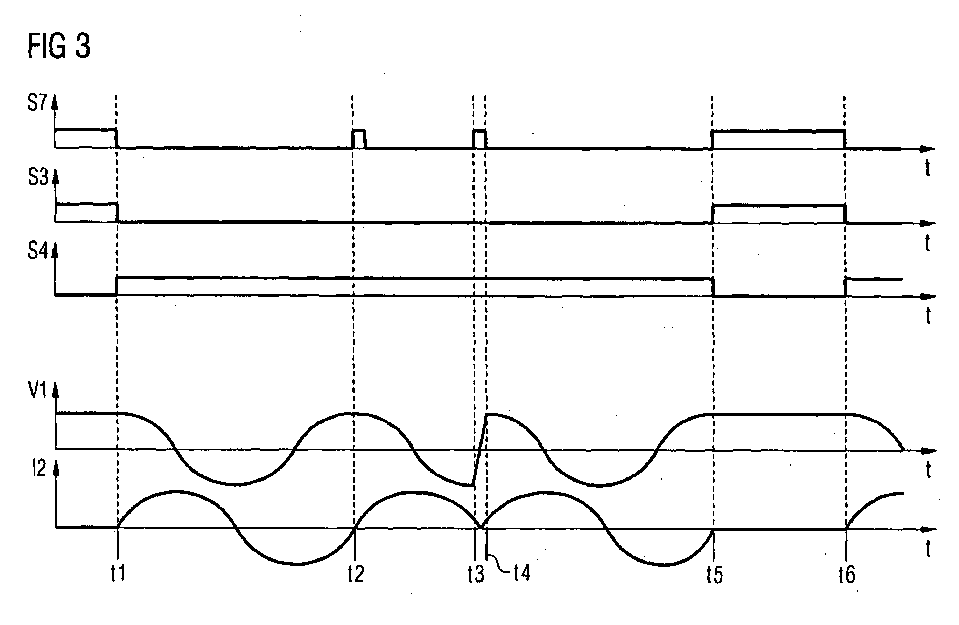

In Figur 3 sind ausgewählte Zeitsignale dargestellt, die den Betrieb der in Figur 1 dargestellten Schwingkreisanordnung verdeutlichen. Neben dem ersten, zweiten und fünften Schaltsignal S3, S4 und S7 ist eine Spannung V1 über dem kapazitiven Speicherelement 1 und ein Strom I2 durch das induktive Speicherelement 2 dargestellt.

Die betrachteten Schaltsignale S3, S4 und S7 sind so mit den entsprechenden Schaltern 3, 4 und 7 gekoppelt, dass der jeweilige Schalter bei einem niedrigen Pegel nicht leitend ist und bei einem hohen Pegel leitend ist.

Zum Aufladen des kapazitiven Speicherelements 1 ist der erste Schalter 3 leitend und der zweite Schalter 4 nicht leitend sowie der fünfte Schalter 7 ebenfalls leitend. Das induktive Speicherelement 2 ist auf diese Weise kurzgeschlossen. Das kapazitive Speicherelement 1 wird durch die Gleichspannungsquelle 8 aufgeladen.

Zum Anschwingen zum Zeitpunkt t1 werden der erste Schalter 3 und der zweite Schalter 4 umgeschaltet sowie der fünfte Schalter 7 nicht leitend geschaltet. Durch erneutes Umschalten des ersten und zweiten Schalters 3 und 4 wird die Schwingung zum Zeitpunkt t5 unterdrückt. Vorteilhafterweise erfolgt das Umschalten, wenn die Spannung V1 über dem kapazitiven Speicherelement 1 maximal ist.

Dämpfungsbedingte Verluste der Spannung können durch kurzzeitiges Anlegen der Gleichspannung an das kapazitive Speicherelement 1 ausgeglichen werden, indem der fünfte Schalter 7 leitend schaltet wird, wenn die Spannung V1 über dem kapazitiven Speicherelement 1 maximal ist. Dieses ist bei lokalen Maxima während des Schwingens, wie zum Zeitpunkt t2, der Fall sowie beim Unterdrücken der Spannung durch Kurzschließen des induktiven Speicherelements 2, wie in der Zeitspanne zwischen den Zeitpunkten t5 und t6.

Eine Phasenumtastung lässt sich bei der ersten, einfachen Ausgestaltung erreichen, indem der fünfte Schalter 7 zum Zeitpunkt t3 leitend schaltet wird, wenn die Spannung V1 über dem kapazitiven Speicherelement 1 minimal ist. In diesem Fall erzwingt die Gleichspannungsquelle, deren Polarität der Polarität der über dem kapazitiven Speicherelement anliegenden Spannung entgegengesetzt ist, ein Ent- und Wiederaufladen des kapazitiven Speicherelements, sodass danach die über dem kapazitiven Speicherelement anliegende Spannung die gleiche Polarität wie die Gleichstromquelle hat.

Alternativ kann die Phasenumtastung auch erreicht werden, wenn der erste Schalter 3 kurzzeitig leitend geschaltet wird, sodass das kapazitive Speicherelement 1 kurzgeschlossen wird, wenn die darüber liegende Spannung V1 minimal ist, und unmittelbar danach aufgeladen wird. Anschließend wird der erste Schalter 3 nicht leitend geschaltet und der Schwingkreis beginnt wieder zu schwingen. Dieses bewirkt einen Phasensprung sowohl der Spannung V1 über dem kapazitiven Speicherelement 1 als auch des Stroms 12 im induktiven Speicherelement 2. Die beschriebenen Ent- und Wiederaufladevorgänge sind mit einem erheblichen Energieaufwand verbunden.

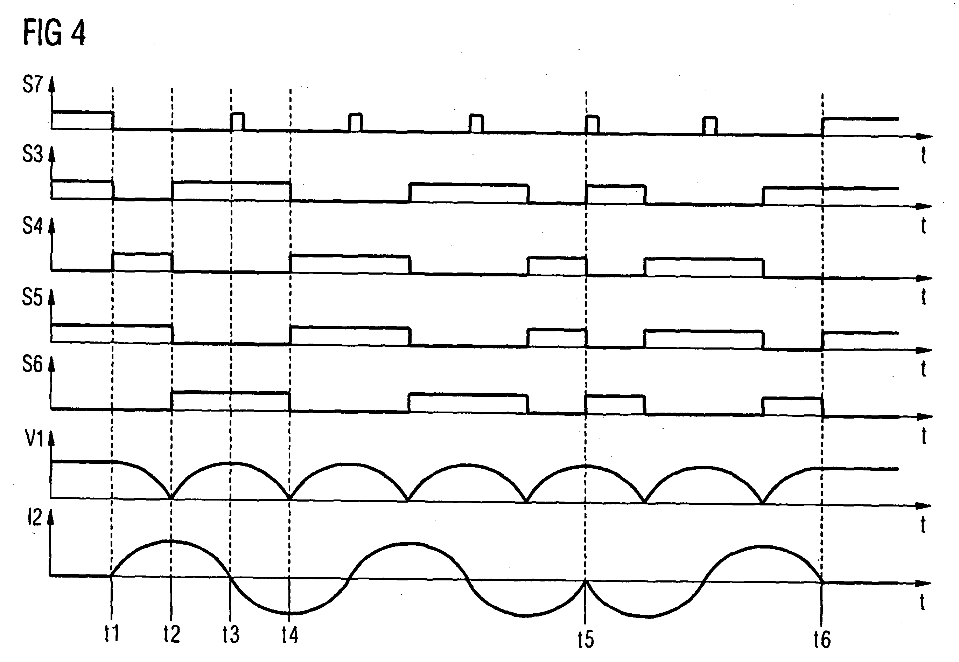

In Figur 4 ist anhand eines weiteren Zeitdiagramms dargestellt, wie Abhilfe geschaffen wird, indem in der in Figur 2 dargestellten weitergebildeten Ausgestaltung der erste bis vierte Schalter 3, 4, 5, 6 taktweise geschaltet werden.

Zum Aufladen des kapazitiven Speicherelements 1 ist der fünfte Schalter 7 leitend geschaltet ebenso wie der erste Schalter 3 und der dritte Schalter 5, dass das induktive Speicherelement 2 kurzgeschlossen ist. Der zweite und der vierte Schalter 4 und 6 sind nicht leitend.

Damit die Schwingkreisanordnung anschwingt, werden zum Zeitpunkt t1 gleichzeitig der erste Schalter 3 und der vierte Schalter 6 nicht leitend geschaltet sowie der zweite Schalter 4 und der dritte Schalter 5 leitend geschaltet. Selbstverständlich wären auch die entgegengesetzten Schaltzustände für den ersten bis vierten Schalter 3, 4, 5 und 6 denkbar. Sobald das kapazitive Speicherelement entladen ist, werden zum Zeitpunkt t2 der erste bis vierte Schalter 3, 4, 5 und 6 umgeschaltet, sodass die Verbindungen der Anschlüsse des induktiven Speicherelements 2 mit den Anschlüssen des kapazitiven Speicherelements 1 vertauscht werden. Auf diese Weise kommt es beim Zurückfließen der Energie ins kapazitive Speicherelement 1 nicht zu einer Vorzeichenumkehr der darüber liegenden Spannung V1. Der durch das induktive Speicherelement 2 fließende Strom I2 fließt jedoch sinusförmig, da der erste bis vierte Schalter 3, 4, 5, 6 taktweise umgeschaltet werden, wenn zum Zeitpunkt t4 keine Energie im kapazitiven Speicherelement 1 gespeichert ist und die Flussrichtung des Stromes I2 durch das induktive Speicherelement nicht verändert wird.

Eine Phasenumtastung lässt sich in dieser Ausgestaltung auf einfache Weise generieren, indem der erste bis vierte Schalter 3, 4, 5 und 6 zum Zeitpunkt t5 umgeschaltet werden, wenn die Energie im kapazitiven Speicherelement 1 maximal ist. Auf diese Weise hat der unmittelbar danach in das induktive Speicherelement 2 zurückfließende Strom I2 einen Phasenversatz um n.

Die Schwingung wird unterdrückt, indem das induktive Speicherelement 2 zum Zeitpunkt 16 durch den leitenden ersten und dritten Schalter 3 und 5 kurzgeschlossen und entladen wird. Währenddessen, wenn der zweite und vierte Schalter 4 und 6 nicht leitend sind, kann das kapazitive Speicherelement 1 wieder aufgeladen werden, indem der fünfte Schalter 7 leitend geschaltet wird.

Indem der fünfte Schalter 7 beispielsweise zum Zeitpunkt t3 kurzzeitig taktweise leitend geschaltet wird, wenn die Energie,im kapazitiven Speicherelement 1 maximal ist, werden Verluste des Schwingkreises kompensiert.

Ein weiterer Vorteil des taktweisen Umschaltens der ersten bis vierten Schalter 3, 4, 5 und 6 gemäß Figur 4 ist aus dem zeitlichen Verlauf der über dem kapazitiven Speicherelement 1 anfallenden Spannung V1 ersichtlicht. Dadurch, dass bei maximaler gespeicherter Energie im kapazitiven Speicherelement 1 stets das gleiche Vorzeichen der darüber liegenden Spannung V1 gegeben ist, muss beim Kurzschließen des induktiven Speicherelements 2 nicht mehr unterschieden werden, ob die über dem kapazitiven Speicherelement 1 anliegende Spannung V1 maximal oder minimal ist. Der Fall, dass die über dem kapazitiven Speicherelement 1 anliegende Spannung V1 ein entgegengesetztes Vorzeichen zu der aufladenden Gleichspannungsquelle hat, tritt nicht auf. Auf diese Weise ist kein energieaufwändiges Umladen des kapazitiven Speicherelements 1 nötig.

Natürlich ist es auch möglich die Schwingkreisanordnung gemäß Figur 2 in gleicher Weise, wie es für die Schwingkreisanordnung gemäß Figur 1 beschrieben worden ist, zu betreiben. In diesem Fall werden das dritte und vierte Schaltsignal S5 und S6 so gewählt, dass der dritte Schalter 5 leitend ist und der vierte Schalter 6 nicht leitend ist. Dieses entspricht dem Hinzufügen oder Weglassen von fixen Verbindungen an den entsprechenden Stellen durch die die weitergebildete Ausgestaltung gemäß Figur 2 in die einfache Ausgestaltung gemäß Figur 1 in überführbar ist.

### Bezugszeichen

- 1: kapazitives Speicherelement
- 11: erster Anschluss des kapazitiven Speicherelements
- 12: zweiter Anschluss des kapazitiven Speicherelements
- 2: induktives Speicherelement
- 21: erster Anschluss des induktiven Speicherelements
- 22: zweiter Anschluss des induktiven Speicherelements
- 3: erster Schalter
- 4: zweiter Schalter
- 5: dritter Schalter
- 6: vierter Schalter
- 7: fünfter Schalter
- 8: Gleichspannungsquelle
- 9: Steuereinheit
- S3: erstes Schaltsignal
- S4: zweites Schaltsignal
- S5: drittes Schaltsignal
- S6: viertes Schaltsignal
- S7: fünftes Schaltsignal
- V1: Spannung über dem kapazitiven Speicherelement
- I2: Strom durch das induktive Speicherelement

## Patentansprüche

1. Schwingkreisanordnung zur Erzeugung eines amplitudenumgetasteten und/oder phasenumgetasteten Signals mit:
- einem kapazitiven Speicherelement (1), das einen ersten Anschluss (11) und einen zweiten Anschluss (12) aufweist, von denen der erste Anschluss (11) mit einem Anschluss zur Bereitstellung einer Steuerspannung verbunden ist und von denen der zweite Anschluss (12) mit einem Anschluss für ein Bezugspotenzial (Vss) verbunden ist,
- einem induktiven Speicherelement (2), das einen ersten Anschluss (21) und einen zweiten Anschluss (22) aufweist, von denen der erste Anschluss (21) mit einem Anschluss für das Bezugspotenzial (Vss) verbunden ist oder verbindbar ist,
wobei
- ein erster Schalter (3) vorgesehen ist, über den der zweite Anschluss (22) des induktiven Speicherelements (2) mit einem Anschluss für das Bezugspotenzial (Vss) verbindbar ist,
**dadurch gekennzeichnet, dass**
- ein zweiter Schalter (4) vorgesehen ist, über den der zweite Anschluss (22) des induktiven Speicherelements (2) mit dem ersten Anschluss (11) des kapazitiven Speicherelements (1) verbindbar ist und
- eine Steuereinheit (9) zur Ansteuerung des ersten und des zweiten Schalters (3, 4) in Abhängigkeit zu übertragender Daten vorgesehen ist.

2. Schwingkreisanordnung nach Anspruch 1, **dadurch gekennzeichnet, dass** der erste Anschluss (21) des induktiven Speicherelements (2) über einen dritten Schalter (5) mit einem Anschluss für das Bezugspotenzial (Vss) verbindbar ist und der erste Anschluss (21) des induktiven Speicherelements (2) über einen vierten Schalter (6) mit dem ersten Anschluss (11) des kapazitiven Speicherelements (1) verbindbar ist.

3. Schwingkreisanordnung nach Anspruch 1 oder 2, **dadurch gekennzeichnet, dass** eine Gleichspannungsquelle über einen fünften Schalter (7) mit dem Anschluss für die Steuerspannung und einem Anschluss für das Bezugspotenzial (Vss) verbindbar ist.

4. Schwingkreisanordnung nach Anspruch 2, **dadurch gekennzeichnet, dass** das erste, zweite, dritte und vierte Schaltsignal (S3, S4, S5 und S6) zur Ansteuerung des ersten, zweiten, dritten und vierten Schalters (3, 4, 5 und 6) so gewählt sind, dass der erste, zweite, dritte und vierte Schalter (3, 4, 5, 6) taktweise schalten, wobei
- der erste und vierte Schalter (3, 6) leitend sind und der zweite und dritte Schalter (4, 5) nicht leitend sind oder
- der erste und vierte Schalter (3, 6) nicht leitend sind und der zweite und dritte Schalter (4, 5) leitend sind.

5. Schwingkreisanordnung nach Anspruch 3, **dadurch gekennzeichnet, dass** ein fünftes Steuersignal (S7) zur Ansteuerung des fünften Schalters (7) so gewählt ist, dass der fünfte Schalter (7) taktweise kurzzeitig leitend ist.

6. Schwingkreisanordnung nach einem der Ansprüche 1 bis 5, **dadurch gekennzeichnet, dass** das induktive Speicherelement (2) als Antenne ausgestaltet ist.

7. Verfahren zum Betrieb einer Schwingkreisanordnung,
wobei in einem ersten Betriebsmodus ein induktives Speicherelement (2) parallel zu einem kapazitiven Speicherelement (1) geschaltet wird,
und in einem zweiten Betriebsmodus der Schwingkreis aufgetrennt und das induktive Speicherelement (2) kurzgeschlossen wird,
wobei ein Umschalten zwischen dem ersten und dem zweiten Betriebsmodus in Abhängigkeit zu übertragender Daten erfolgt.

8. Verfahren nach Anspruch 7, **dadurch gekennzeichnet, dass** entweder das kapazitive Speicherelement (1) oder das induktive Speicherelement (2) beim Schalten in den ersten Betriebsmodus aufgeladen ist.

9. Verfahren nach Anspruch 7 oder 8, **dadurch gekennzeichnet, dass** im ersten Betriebsmodus das kapazitive Speicherelement (1) durch taktweises, kurzzeitiges Anlegen einer Gleichspannung wieder aufgeladen wird, wenn die Differenz zwischen angelegbarer Gleichspannung und der Spannung über dem kapazitiven Speicherelement (1) minimal ist.

10. Verfahren nach Anspruch 7 oder 8, **dadurch gekennzeichnet, dass** zwischen dem ersten und dem zweiten Betriebsmodus umgeschaltet wird, wenn die im kapazitiven Speicherelement (1) gespeicherte Energie maximal ist.

11. Verfahren nach Anspruch 7, **dadurch gekennzeichnet, dass** der erste Betriebsmodus unterbrochen oder vor dem Wechsel in einen anderen Betriebsmodus beendet wird, indem das kapazitive Speicherelement (1), wenn die Spannung über diesem minimal ist, entladen wird und wieder aufgeladen durch zeitbegrenztes Anlegen einer Gleichspannung wird.

12. Verfahren nach einem der Ansprüche 7 bis 9, **dadurch gekennzeichnet, dass** in einem dritten Betriebsmodus das induktive Speicherelement (2) parallel zum kapazitiven Speicherelement (1) geschaltet wird, wobei das induktive Speicherelement gegenüber dem ersten Betriebsmodus umgepolt wird.

13. Verfahren nach Anspruch 12, **dadurch gekennzeichnet, dass** zwischen dem ersten und dem dritten Betriebsmodus umgeschaltet wird oder zwischen dem zweiten und dritten Betriebsmodus umgeschaltet wird, wenn die Energie im kapazitiven Speicherelement (1) maximal ist.

14. Verfahren nach Anspruch 12, **dadurch gekennzeichnet, dass** zwischen dem ersten und dem dritten Betriebsmodus umgeschaltet wird, wenn die Energie im induktiven Speicherelement (2) maximal ist.

15. Verwendung der Schwingkreisanordnung gemäß des Anspruchs 1 oder 2 zur Erzeugung eines amplituden- und/oder phasenumgetasteten Signals in einem Sender oder Transponder.

## Claims

1. Resonant circuit arrangement for generating an amplitude-shift-keyed and/or phase-shift-keyed signal, said circuit arrangement having:
- a capacitive storage element (1) having a first terminal (11) and a second terminal (12), the first terminal (11) of which is connected to a terminal for providing a control voltage and the second terminal (12) of which is connected to a terminal for a reference potential (Vss),
- an inductive storage element (2) having a first terminal (21) and a second terminal (22), the first terminal (21) of which is connected or can be connected to a terminal for the reference potential (Vss),
- provision made of a first switch (3) which can be used to connect the second terminal (22) of the inductive storage element (2) to a terminal for the reference potential (Vss),
**characterized in that**
- provision is made of a second switch (4) which can be used to connect the second terminal (22) of the inductive storage element (2) to the first terminal (11) of the capacitive storage element (1), and
- provision is made of a control unit (9) for driving the first and second switches (3, 4) on the basis of data to be transmitted.

2. Resonant circuit arrangement according to Claim 1, **characterized in that** the first terminal (21) of the inductive storage element (2) can be connected to a terminal for the reference potential (Vss) by means of a third switch (5), and the first terminal (21) of the inductive storage element (2) can be connected to the first terminal (11) of the capacitive storage element (1) by means of a fourth switch (6).

3. Resonant circuit arrangement according to Claim 1 or 2, **characterized in that** a DC voltage source can be connected to the terminal for the control voltage and to a terminal for the reference potential (Vss) by means of a fifth switch (7).

4. Resonant circuit arrangement according to Claim 2, **characterized in that** the first, second, third and fourth switching signals (S3, S4, S5 and S6) for driving the first, second, third and fourth switches (3, 4, 5 and 6) are selected in such a manner that the first, second, third and fourth switches (3, 4, 5, 6) switch in a clocked manner,
- the first and fourth switches (3, 6) being on and the second and third switches (4, 5) being off, or
- the first and fourth switches (3, 6) being off and the second and third switches (4, 5) being on.

5. Resonant circuit arrangement according to Claim 3, **characterized in that** a fifth control signal (S7) for driving the fifth switch (7) is selected in such a manner that the fifth switch (7) is briefly on in a clocked manner.

6. Resonant circuit arrangement according to one of Claims 1 to 5, **characterized in that** the inductive storage element (2) is in the form of an antenna.

7. Method for operating a resonant circuit arrangement,
an inductive storage element (2) being connected in parallel with a capacitive storage element (1) in a first operating mode,
the resonant circuit being disconnected and the inductive storage element (2) being short-circuited in a second operating mode, and
the process changing over between the first and second operating modes on the basis of data to be transmitted.

8. Method according to Claim 7, **characterized in that** either the capacitive storage element (1) or the inductive storage element (2) is charged upon switching to the first operating mode.

9. Method according to Claim 7 or 8, **characterized in that** the capacitive storage element (1) is charged again in the first operating mode by briefly applying a DC voltage in a clocked manner if the difference between the DC voltage that can be applied and the voltage across the capacitive storage element (1) is minimal.

10. Method according to Claim 7 or 8, **characterized in that** the process changes over between the first and second operating modes if the energy stored in the capacitive storage element (1) is maximal.

11. Method according to Claim 7, **characterized in that** the first operating mode is interrupted or is terminated before changing to another operating mode by discharging the capacitive storage element (1) if the voltage across the latter is minimal and charging it again by applying a DC voltage for a limited time.

12. Method according to one of Claims 7 to 9, **characterized in that** the inductive storage element (2) is connected in parallel with the capacitive storage element (1) in a third operating mode, the polarity of the inductive storage element being reversed in comparison with the first operating mode.

13. Method according to Claim 12, **characterized in that** the process changes over between the first and third operating modes or between the second and third operating modes if the energy in the capacitive storage element (1) is maximal.

14. Method according to Claim 12, **characterized in that** the process changes over between the first and third operating modes if the energy in the inductive storage element (2) is maximal.

15. Use of the resonant circuit arrangement according to Claim 1 or 2 for generating an amplitude-shift-keyed and/or phase-shift-keyed signal in a transmitter or transponder.

## Revendications

1. Circuit oscillant pour produire un signal modulé par déplacement d'amplitude et/ou par déplacement de phase comprenant:
- un élément (1) capacitif d'accumulation, qui a une première borne (11) et une deuxième borne (12), parmi lesquelles la première borne (11) est reliée à une borne d'application d'une tension de commande et parmi lesquelles la deuxième borne (12) est reliée à une borne pour un potentiel (Vss) de référence,
- un élément (2) inductif d'accumulation, qui a une première borne (21) et une deuxième borne (22), parmi lesquelles la première borne (21) est reliée ou peut être reliée à une borne pour le potentiel (Vss) de référence,
dans lequel
- il est prévu un premier commutateur (3) par lequel la deuxième borne (22) de l'élément (2) inductif d'accumulation peut être reliée à une borne pour le potentiel (Vss) de référence,
**caractérisé en ce que**
- il est prévu un deuxième commutateur (4) par lequel la deuxième borne (22) de l'élément (2) inductif d'accumulation peut être reliée à la première borne (11) de l'élément (1) capacitif d'accumulation et
- il est prévu une unité (9) de commande pour commander le premier et le deuxième commutateur (3, 4) en fonction des données à transmettre.

2. Circuit oscillant suivant la revendication 1, **caractérisé en ce que** la première borne (21) de l'élément (2) inductif d'accumulation peut être reliée par un troisième commutateur (5) à une borne pour le potentiel (Vss) de référence et la première borne (21) de l'élément (2) inductif d'accumulation peut être reliée par un quatrième commutateur (6) à la première borne (11) de l'élément (1) capacitif d'accumulation.

3. Circuit oscillant suivant la revendication 1 ou 2, **caractérisé en ce qu'**une source de tension continue peut être reliée par un cinquième commutateur (7) à la borne pour la tension de commande et à une borne pour le potentiel (Vss) de référence.

4. Circuit oscillant suivant la revendication 2, **caractérisé en ce que** le premier, le deuxième, le troisième et le quatrième signal (S3, S4, S5 et S6) de commutation pour commander le premier, le deuxième, le troisième et le quatrième commutateur (3, 4, 5 et 6) sont choisis de façon à ce que le premier, le deuxième, le troisième et le quatrième commutateur (3, 4, 5, 6) commutent en cadence
- le premier et le quatrième commutateur (3, 6) étant passants et le deuxième et le troisième commutateur (4, 5) n'étant pas passants ou
- le premier et le quatrième commutateur (3, 6) n'étant pas passants et le deuxième et le troisième commutateur (4, 5) étant passants.

5. Circuit oscillant suivant la revendication 3, **caractérisé en ce qu'**un cinquième signal (S7) de commande du cinquième commutateur (7) est choisi de façon à ce que le cinquième commutateur (7) soit passant pendant une brève durée de façon cadencée.

6. Circuit oscillant suivant l'une des revendications 1 à 5, **caractérisé en ce que** l'élément (2) inductif d'accumulation est sous la forme d'une antenne.

7. Procédé pour faire fonctionner un circuit oscillant, dans lequel on monte, dans un premier mode de fonctionnement, un élément (2) inductif d'accumulation en parallèle avec un élément (1) capacitif d'accumulation,
et, dans un deuxième mode de fonctionnement, du circuit oscillant on sépare le circuit oscillant et on court-circuite l'élément (2) inductif d'accumulation,
dans lequel on effectue une commutation entre le premier et le deuxième mode de fonctionnement en fonction des données à transmettre.

8. Procédé suivant la revendication 7, **caractérisé en ce que** l'on charge soit l'élément (1) capacitif d'accumulation, soit l'élément (2) inductif d'accumulation lors de la commutation dans le premier mode de fonctionnement.

9. Procédé suivant la revendication 7 ou 8, **caractérisé en ce que**, dans le premier mode de fonctionnement, on recharge l'élément (1) capacitif d'accumulation par application de brèves durées et en cadence d'une tension continue si la différence entre la tension continue qui peut être appliquée et la tension aux bornes de l'élément (1) capacitif d'accumulation est minimum.

10. Procédé suivant la revendication 7 ou 8, **caractérisé en ce que** l'on commute entre le premier et le deuxième mode de fonctionnement, si l'énergie emmagasinée dans l'élément (1) capacitif d'accumulation est maximum.

11. Procédé suivant la revendication 7, **caractérisé en ce que** l'on interrompt le premier mode de fonctionnement ou l'on y met fin avant de passer dans l'autre mode de fonctionnement, en déchargeant l'élément (1) capacitif d'accumulation si la tension à ses bornes est minimum et en le rechargeant par application d'unités dans le temps d'une tension continue.

12. Procédé suivant l'une des revendications 7 à 9, **caractérisé en ce que** dans un troisième mode de fonctionnement on monte l'élément (2) inductif d'accumulation en parallèle avec l'élément (1) capacitif d'accumulation, la polarité de l'élément inductif d'accumulation étant inversée par rapport au premier mode de fonctionnement.

13. Procédé suivant la revendication 12, **caractérisé en ce que** l'on commute entre le premier et le troisième mode de fonctionnement ou entre le deuxième et le troisième mode de fonctionnement, si l'énergie est maximum dans l'élément (1) capacitif d'accumulation.

14. Procédé suivant la revendication 12, **caractérisé en ce que** l'on commute entre le premier et le troisième mode de fonctionnement, si l'énergie est maximum dans l'élément (2) inductif d'accumulation.

15. Utilisation du circuit oscillant suivant la revendication 1 ou 2 pour la production d'un signal modulé par déplacement d'amplitude ou par déplacement de phase dans un émetteur ou un transpondeur.
